# EUROPEAN PATENT SPECIFICATION

(11) **EP 0 634 445 B1**
(45) Date of publication and mention of the grant of the patent: **11.08.1999**
(21) Application number: 94305105.2
(22) Date of filing: 13.07.1994
(51) Int. Cl.: C08K 3/00, C08L 51/06, C08L 69/00, G02B 5/02

(54) **Light diffuser composition**
Lichtstreuende Zusammensetzung
Composition diffusant la lumière

(30) Priority: 14.07.1993 GB 9314604
(43) Date of publication of application: 18.01.1995
(73) Proprietor: THE DOW CHEMICAL COMPANY, Midland, Michigan 48674 (US)
(72) Inventor: Eiffler, Juergen, D-2160 Stade (DE); Snook, Craig, D-2160 Stade (DE); Jasperse, Willem, NL-4532 JE Terneuzen (NL); Wegman, Thomas, NL-4611 LV Bergen op Zoom (NL)
(74) Representative: Raynor, John

(56) References cited:
- EP-A- 0 269 324
- EP-A- 0 474 203
- CHEMICAL ABSTRACTS, vol. 109, no. 10, 5 September 1988, Columbus, Ohio, US; abstract no. 74390t, & KAGAKU KOGYO, vol.39, no.5, 1988 pages 415 - 421 KUNIO FURUSAWA 'Functional polymer emulsions - their new development'
- DATABASE WPI Week 9231, Derwent Publications Ltd., London, GB; AN 92-256536 & JP-A-4 175 351 (TOA GOSEI CHEM. IND., LTD) 23 June 1992
- CHEMICAL ABSTRACTS, vol. 119, no. 4, 26 July 1993, Columbus, Ohio, US; abstract no. 29205g, & JP-A-4 309 528 (TOA GOSEI CHEMICAL INDUSTRY CO., LTD.) 2 November 1992
- CHEMICAL ABSTRACTS, vol. 118, no. 26, 28 June 1993, Columbus, Ohio, US; abstract no. 256247v, & JP-A-4 256 345 (TOA GOSEI CHEMICAL INDUSTRY CO., LTD) 11 September 1992

## Description

The present invention relates to a light diffuser composition and its use for imparting light diffusing properties to a thermoplastic polymer. The present invention further relates to a polymer composition containing the novel light diffuser composition and to a compounded composition or molded article produced therefrom.

It is well known to incorporate light diffusers into thermoplastic, transparent polymers. The light diffusers are generally white. When light diffusers are incorporated into a thermoplastic polymer, the polymer composition and articles produced therefrom have light diffusing properties. Usually the resulting colors of these composites are called opalescent colors. They are semi-transparent or translucent to visible light, that is, they scatter transmitted light so that the light source is not visible. Light diffusing polymer compositions may be formed into sheets or films of various thicknesses, or into more complex shapes, such as lamp covers like globes etc. Light diffusing polymer compositions are widely used by the lighting industry for producing luminaires, like fixed luminaires, road and street lighting, emergency lighting, etc.
Accordingly, one important property of light diffusing polymer compositions and articles produced therefrom is a high resistance to thermal aging, particularly a high color stability when exposed to elevated temperatures over an extended time period.

It is known to incorporate certain inorganic additives into polymer compositions in order to impart to the compositions light-diffusing properties.

British patent specification 1,595,426 disclose plastics containing a translucent organic polymer and a white pigment which appear white in reflected and transmitted light. The refractive index nₒ of the polymer is in the range of from 1.4 to 1.65 and the refractive index n of the pigment is in the range of from 1.7 to 2.9. Exemplary of white pigments are for example titanium phosphate, lead hydrogen phosphate, zinc oxide, zinc sulfide, magnesium titanate, calcium titanate, titanium dioxide, etc.

German patent 22 51 708 teaches it to be known that white pigments, such as titanium dioxide, zinc sulfide or zinc oxide provide articles produced from organic polymers with an milky white color. The German patent teaches that such pigmented articles have such a low light transmittance that they are not useful as lamp covers. If only a small amount of such pigments is used, they do not scatter the light. German patent 2 251 708 teaches that barium sulfate which has isometrical particles of an average size of 2 to 12 micrometer, preferably of 4 to 9 micrometer, imparts good light-diffusing properties to thermoplastic polymer compositions. Unfortunately, the incorporation of inorganic additives of such a large particle size into thermoplastic polymer compositions has the effect that molded articles produced from such compositions have an uneven surface. Pits and holes can be observed in the surface of the molded articles which are caused by the large particle size of barium sulfate. Furthermore, it is difficult to disperse these inorganic additives evenly in the thermoplastic polymer.

German Offenlegungsschrift DE-A-2,019,325 discloses that the addition of pigments, for example inorganic oxides, such as titanium dioxide, sulfides, such as zinc sulfide, or salts, such as barium sulfate, cause a certain degradation of polycarbonate in the presence of humidity. German Offenlegungsschrift DE-A-2,019,325 suggests stabilization of pigmented polycarbonates by incorporating epoxy groups containing vinyl copolymers into the polycarbonates. A preferred vinyl copolymer is a copolymer of glycidyl methacrylate, methyl methacrylate and styrene. Alternatively, German Offenlegungsschrift DE-A-2,105,487 suggests stabilization of pigmented polycarbonates by incorporating vinyl polymers free of epoxy groups into the polycarbonates. Preferred vinyl polymers are homo- or copolymers of acrylonitrile or methacrylonitrile, derivatives of acrylic or methacrylic acid, such as the methyl, ethyl or butyl esters of acrylic acid, or polymers of alkenyl aromatic compounds, such as styrene or alpha-methyl styrene. The stabilized pigmented polycarbonates disclosed in DE-A-2,019,325 and DE-A-2,105,487 contain from 0.5 to 1.5% of the pigment, such as titanium dioxide, by the weight of the polycarbonate and 5-100%, preferably 10-30%, of the stabilizing vinyl polymer, by the weight of the pigment content. Unfortunately, the use of titanium dioxide at such high levels may promote polymer degradation.

Unfortunately, various common inorganic light diffusers are known to be sensitive to heat and oxygen (for example barium sulfate) or to UV light. Therefore, various light-diffusing polymer particles have been suggested to impart light-scattering properties to polycarbonates or other thermoplastic polymers.

From CA Selects: Plastics Manufacture & Processing, Issue 23, 1992, page 16, Abstract 117:193113e, abstracting JP 04,161,448, light-diffusing polycarbonate compositions are known which comprise 90-99.95% of aromatic polycarbonates and 0.1-10% of spherical particles with an average diameter of 5 to 100 micrometers consisting of powdered titanium dioxide coated with cross-linked cyclohexylmaleimide-styrene copolymers I) containing 10-90% cyclohexylmaleimide. A blend of a 99.9% of Iupilon S 3000 (trademark) and 0.1% Techpolymer MR 636 (powdered titanium dioxide coated with copolymer I) is injection-molded at 280°C to give a specimen with light transmission of 70% and diffused light transmission of 40%. Unfortunately, spherical particles of cross-linked cyclohexylmaleimide-styrene copolymers are quite expensive.

The published European patent application 0,269,324 discloses an organic light diffuser which is suitable for incorporation into a thermoplastic polymer matrix to form a light-diffusing polymer composition. This light diffuser comprises particles of core/shell morphology which have an average diameter of from 2 to 15 micrometer. The particles have a core of a rubbery alkyl acrylate polymer. The particles have one or more polymer shells, the outer most of which is compatible with the matrix polymer. The shells comprise from 5 to 40% of the weight of the particles. According to the Examples of the European patent application the light diffuser is utilized in amounts of from 2 to 10%, based on the total weight of the polymer composition. Unfortunately, polymer compositions containing such a high percentage of a light diffuser do not have a very high color stability when exposed to elevated temperatures over an extended period of time. Therefore, their utility for lighting applications, such as lamp covers, is limited.

One object of the present invention is to provide light diffusers of improved color stability when exposed to elevated temperatures over an extended time period.

One aspect of the present invention is a light diffuser composition comprising
a) from 0.1 to 30 weight parts of inorganic particles having an average particle diameter of from 0.1 to 1 micrometer and a refractive index of from 1.9 to 3.2 and
b) from 1 to 150 weight parts of polymeric particles having a core/shell morphology with a core of a rubbery vinyl polymer and one or more shells, which particles contain at least 15% of a polymerized alkyl acrylate or alkyl methacrylate, based on the total weight of the particles.

The term "average particle diameter" as used herein refers to number average particle diameter.

Another aspect of the present invention is the use of the above-mentioned light diffuser composition for imparting light diffusing properties to a thermoplastic polymer.

Yet another aspect of the present invention is a polymer composition comprising a thermoplastic polymer and
a) from 0.001 to 0.3% of the above-mentioned inorganic particles a) and
b) from 0.01 to 1.5% of the above-mentioned polymeric particles b), based on the weight of the thermoplastic polymer. The polymer composition of the present invention can be in various shapes, for example in the form of a simple mixture of a thermoplastic polymer, the inorganic particles a) and the polymeric particles b) or in the form of pellets or granules or molded articles.

Surprisingly, it has been found that an article produced from a polymer composition comprising a combination of the inorganic particles a) and the polymeric particles b) in the indicated amounts is more resistant to thermal aging than an article produced from a comparable polymer composition containing the polymeric particles b) alone. By "comparable" is meant that the two polymer compositions or articles produced therefrom have similar optical properties, particularly similar total light transmittance and light diffusion. The improved resistance to thermal aging is visualized as improved color stability, i.e. decreased tendency to yellowing when exposed to elevated temperatures over an extended period of time. It has even been found that at a given concentration of polymeric particles b) the color stability increases with increasing concentrations of the inorganic particles a) within the claimed range. This finding is contrary to the experience made with other polymeric light-diffusing particles which do not have core/shell morphology. Polymer compositions containing a combination of inorganic particles a) and said other polymeric light-diffusing particles have found to be less resistant to thermal aging than a polymer composition containing said other polymeric light-diffusing particles alone.

In the practice of producing opalescent polymer compositions it is often desirable that their total light transmittance is in the range from 25 to 50%. When using the above-described polymeric particles b) alone as a light diffuser, the polymer composition generally contains from 4 to 10% of polymeric particles b), based on the weight of the thermoplastic polymer, in order to achieve such a low light transmittance. Such high amounts of polymeric particles b) decrease the color stability of the polymer composition when it is exposed to elevated temperatures over an extended period of time. Furthermore, the viscosity of the polymer composition increases when the concentration of polymeric particles b) in the polymer composition increases. Both problems can be solved by using the inorganic particles a) in combination with the polymeric particles b) and by reducing the concentration of the polymeric particles b) in the opalescent polymer composition. Surprisingly, the improved color stability of the polymer composition of the present invention is not only due to the reduced concentration of the polymeric particles b). Even if the concentration of the polymeric particles b) is kept constant, e.g. at 1 weight-percent, the addition of the inorganic particles a) in an amount within the claimed weight range generally increases the color stability of the polymer composition.

Yet another aspect of the present invention is a process for producing a polymer composition which comprises mixing with a thermoplastic polymer
a) from 0.001 to 0.3% of the above-mentioned inorganic particles a) and
b) from 0.01 to 1.5% of the above-mentioned polymeric particles b),
based on the weight of the thermoplastic polymer,
optionally compounding the mixture to granules or pellets and
optionally producing a molded article from the granules or pellets.

The light diffuser composition of the present invention contains
a) from 0.1 to 30, preferably from 1 to 25, more preferably from 2 to 20 weight parts of inorganic particles having an average particle diameter of from 0.1 to 1 micrometer and a refractive index of from 1.9 to 3.2. and
b) from 1 to 150, preferably from 10 to 120, more preferably from 20 to 100 weight parts of polymeric particles having a core/shell morphology with a core of a rubbery vinyl polymer and one or more shells, wnich particles contain at least 15% of a polymerized alkyl acrylate or alkyl methacrylate, based on the total weight of the particles.

The weight ratio between the inorganic particles a) and the polymeric particles b) preferably is from 0.5 : 1 to 100 : 1, more preferably >1 : 1 to 50 : 1, most preferably 2 : 1 to 25 : 1.

The inorganic particles a) have an average particle diameter of from 0.1 to 1 micrometer, preferably from 0.2 to 0.8 micrometer, most preferably from 0.2 to 0.4 micrometer. Such inorganic particles and methods of producing them are well known in the art. By the term "average particle diameter" the number average is meant. The inorganic particles have a refractive index of from 1.9 to 3.2, preferably from 2.0 to 2.9, most preferably from 2.0 to 2.7. Preferred inorganic particles a) are titanium dioxide, silica gel, zinc sulfide, zinc oxide or MgTiO₃ particles, provided that their particle size distribution is within the indicated range. The most preferred inorganic particles are titanium dioxide particles. The inorganic particles can be used in the various modifications, for example the anatase, brookite or rutile configuration of titanium dioxide is useful. Titanium dioxide may be coated with a layer of siloxane. Coated titanium dioxide and a method of preparing it is known.

The polymeric particles b) have a core of a rubbery vinyl polymer. The rubbery vinyl polymer can be a homo- or copolymer of any of the monomers having at least one ethylenically unsaturated group which are well known to those skilled in the art to undergo addition polymerization under the conditions of emulsion polymerization in aqueous medium. Such monomers are listed in U.S. patent No. 4,226,752, column 3, lines 40-62, the teaching of which is included herein by reference. The rubbery vinyl polymer preferably contains at least 15%, more preferably at least 25%, most preferably at least 40% of a polymerized acrylate, methacrylate, monovinyl arene or optionally substituted butadiene and from 0 to 85%, more preferably from 0 to 75%, most preferably from 0 to 60% of one or more copolymerized vinyl monomers, based on the total weight of the rubbery vinyl polymer.

Preferred acrylates and methyacrylates are alkyl acrylates or alkyl methacrylates which preferably contain 1 to 18, more preferably 1 to 8, most preferably 2 to 8, carbon atoms in the alkyl group, such as methyl, ethyl, n-propyl, isopropyl, n-butyl, sec. butyl or tert. butyl or the hexyl, heptyl or octyl groups. The alkyl group may be branched or linear. The preferred alkyl acrylates are ethyl acrylate, n-butyl acrylate, isobutyl acrylate or 2-ethylhexyl acrylate. The most preferred alkyl acrylate is butyl acrylate.

Other useful acrylates are for example 1,6-hexanediol diacrylate, ethylthioethyl methacrylate, isobornyl acrylate, 2-hydroxyethyl acrylate, 2-phenoxyethyl acrylate, glycidyl acrylate, neopentyl glycol diacrylate, 2-ethoxyethyl acrylate t-butylaminoethyl methacrylate, 2-methoxyethyl acrylate, glycidyl methacrylate or benzyl methacrylate.

Preferred monovinyl arenes are styrene or alpha-methyl styrene, optionally substituted at the aromatic ring with an alkyl group, such as methyl, ethyl or tertiary butyl or with a halogen, such as chlorostyrene.

If substituted, the butadiene preferably is substituted with one or more alkyl groups containing 1 to 6 carbon atoms or with one or more halogens, most preferably with one or more methyl groups and/or one or more chlorines. Preferred butadienes are 1,3-butadiene, isoprene, chlorobutadiene, or 2,3-dimethyl-1,3-butadiene.

The rubbery vinyl polymer may contain one or more (co)polymerized acrylates, methacrylates, monovinyl arenes and/or optionally substituted butadienes. These monomers may be copolymerized with one or more other copolymerizable vinyl polymers, such as diacetone acrylamide, vinylnaphthalene, 4-vinyl benzyl alcohol, vinyl benzoate, vinyl propionate, vinyl caproate, vinyl chloride, vinyl oleate, dimethyl maleate, maleic anhydride, dimethyl fumarate, vinyl sulfonic acid, vinyl sulfonamide, methyl vinyl sulfonate, N-vinyl pyrrolidone, vinyl pyridine, divinyl benzene, vinyl acetate, vinyl versatate, acrylic acid, methacrylic acid, N-methyl methacrylamide, acrylonitrile, methacrylonitrile, acrylamide or N-(isobutoxymethyl)acrylamide.

One or more of the above-mentioned monomers are optionally reacted with 0-10%, preferably with 0-5%, of a copolymerizable polyfunctional cross-linker and/or with 0-10%, preferably with 0-5%, of a copolymerizable polyfunctional graftlinker, based on the total weight of the core. If a cross-linking monomer is employed, it is preferably used at a level of from 0.05 to 5%, more preferably from 0.1 to 1%, based on the total weight of the core monomers. Crosslinking monomers are well known in the art and generally have a polyethylenic unsaturation in which the ethylenically unsaturated groups have approximately equal reactivity, such as divinylbenzene, trivinylbenzene, 1,3- or 1,4-triol acrylates or methacrylates, glycol di- or trimethacrylates or -acrylates, such as ethylene glycol dimethacrylate or diacrylate, propylene glycol dimethacrylate or diacrylate, 1,3- or 1,4-butylene glycol dimethacrylate or, most preferably, 1,3- or 1,4-butylene glycol diacrylate. If a graftlinking monomer is employed, it is preferably used at a level of from 0.1 to 5%, more preferably from 0.5 to 2.5%, based on the total weight of the core monomers. Graftlinking monomers are well known in the art and generally are polyethylenically unsaturated monomers having sufficiently low reactivity of the unsaturated groups to allow significant residual unsaturation to remain in the core subsequent to its polymerization. Preferred graftlinkers are copolymerizable allyl, methallyl or crotyl esters of alpha,beta-ethylenically unsaturated carboxylic acids or dicarboxylic acids, such as allyl methacrylate, allyl acrylate, diallyl maleate, and allyl acryloxypropionate, most preferably allyl methacrylate.

Most preferably, the polymeric particles b) contain a core of a rubbery alkyl acrylate polymer, the alkyl group having from 2 to 8 carbon atoms, optionally copolymerized with from 0 to 5% cross-linker and from 0 to 5% graftlinker, based on the total weight of the core. The rubbery alkyl acrylate is preferably copolymerized with up to 50% of one or more copolymerizable vinyl monomers, for example those mentioned above. Suitable cross-linking and graft-linking monomers are well known to those skilled in the art and are preferably those disclosed in published European patent application 0 269 324.

The core of the polymeric particles b) may contain residual oligomeric material used in the polymerization process to swell the polymer particles, but such oligomeric material has a high enough molecular weight to prevent its diffusion or being extracted during processing or use.

The polymeric particles b) contain one or more shells. Said one or more shells are preferably made of a vinyl homo- or copolymer. Suitable monomers for producing the shell(s) are listed in U.S. patent No. 4,226,752, column 4, lines 20-46, the teaching of wnich is included herein by reference. One or more shells are preferably a polymer of a methacrylate, acrylate, vinyl arene, vinyl carboxylate, acrylic acid and/or methacrylic acid.

Preferred acrylates and methyacrylates are alkyl acrylates or alkyl methacrylates which preferably contain 1 to 18, more preferably 1 to 8, most preferably 2 to 8, carbon atoms in the alkyl group, such as methyl, ethyl, n-propyl, sopropyl, n-butyl, isobutyl or tert. butyl, 2-ethylhexyl or the hexyl, heptyl or octyl groups. The alkyl group may be branched or linear. The preferred alkyl acrylate is ethyl acrylate. Other useful acrylates and methacrylates are those listed above for the core, preferably the 3-hydroxypropyl methacrylate. The most preferred alkyl methacrylate is methyl methacrylate.

Preferred vinyl arenes are styrene or alphamethyl styrene, optionally substituted at the aromatic ring with an alkyl group, such as methyl, ethyl or tertiary butyl or with a halogen, such as chlorostyrene.

A preferred vinyl carboxylate is vinyl acetate.

The shell(s) preferably contain(s) at least 15%, more preferably at least 25%, most preferably at least 40% of a polymerized methacrylate, acrylate or monovinyl arene and 0 to 85%, more preferably 0 to 75%, most preferably 0 to 60% of one or more vinyl comonomers, such as other alkyl methacrylates, aryl methacrylates, alkyl acrylates, aryl acrylates, alkyl and aryl acryl amides, acrylonitrile, methacrylonitrile, maleimide and/or alkyl and aryl acrylates and methacrylates being substituted with one or more substituents, such as halogen, alkoxy, alkylthio, cyanoalkyl or amino. Examples of suitable vinyl comonomers are listed above. Two or more monomers can be copolymerized.

The shell polymer may contain a cross-linker and/or a graft-linker af the type indicated above with respect to the core polymer.

The shell polymers preferably comprise from 5 to 40%, more preferably from 15 to 35%, of the total particle weight.

The polymeric particles b) contain at least 15%, preferably from 20 to 80%, more preferably from 25 to 60%, most preferably from 30 to 50%, of a polymerized alkyl acrylate or methacrylate, based on the total weight of the polymer. Preferred alkyl acrylates and methacrylates are listed above. The alkyl acrylate or alkyl methacrylate constituent can be comprised in the core and/or in the shell(s) of the polymeric particles b). Homopolymers of an alkyl acrylate or methacrylate in the core and/or the shell(s) are useful, however, an alkyl (meth)acrylate is preferably copolymerized with one or more other types of alkyl (meth)acrylates and/or one or more other vinyl polymers, preferably those listed above. Most preferably, the polymeric particles b) contain a core of a poly(butyl acrylate) and one or more shells of poly(methyl methacrylate).

The polymeric particles b) are useful for imparting light diffusing properties to thermoplastic polymers. The refractive index n of core and of the shell(s) of the polymeric particles b) preferably is within +/-0.25 units of, more preferably within +/-0.18 units of, most preferably within +/-0.12 units of the refractive index of the thermoplastic polymer. The refractive index n of the core and of the shell(s) preferably is not closer than +/-0.003 units to, more preferably not closer than +/-0.01 units to, most preferably not closer than +/-0.05 units to the refractive index of the thermoplastic polymer. The refractive index is measured according to ASTM D 542-50 and/or DIN 53400.

The polymeric particles b) generally have an average particle diameter of at least 0.5 micrometer, preferably of at least 2 micrometer, more preferably from 2 to 50 micrometer, most preferably from 2 to 15 micrometer. By "average particle diameter" the number average is meant. Preferably, at least 90%, most preferably at least 95%, of the polymeric particles b) have a diameter of more than 2 micrometer. The polymeric particles b) are preferably a free-flowing powder.

The polymer particles b) can be produced in a known manner. Generally, at least one monomer component of the core polymer is subjected to emulsion polymerization to form emulsion polymer particles. The emulsion polymer particles are swollen with the same or one or more other monomer components of the core polymer and the monomer(s) are polymerized within the emulsion polymer particles. The swelling and polymerizing steps may be repeated until the particles have grown to the desired core size. The core polymer particles are suspended in a second aqueous monomer emulsion and a polymer shell is polymerized from the monomer(s) onto the polymer particles in the second emulsion. One or more shells can be polymerized on the core polymer. The preparation of core/shell polymer particles is disclosed in published European patent application 0,269,324 and in U.S. patent Nos. 3,793,402 and 3,808,180.

The light diffuser composition of the present invention can be prepared by blending the inorganic particles a) and the polymeric particles b) in the above-indicated weight ratios. The blending can be conducted in an organic diluent. Preferably the dry components a) and b) are blended. Alternatively, the inorganic particles a) can be added prior to or during the production of the polymeric particles b).

The blending temperature is not critical. Room temperature is the most convenient one, however, decreased or elevated temperatures are also useful.

The light diffuser composition of the present invention may contain other inorganic pigments, such as barium sulfate, however, the inclusion of such other inorganic pigments is less preferred. The light diffuser composition of the present invention may contain other organic light diffusers, such as crosslinked poly(methyl methacrylates), polyolefins, MBS-rubbers or another light diffuser described further below. However, the light diffuser composition of the present invention is also very useful in the absence of any significant amounts of other pigments or light diffusers.

The light diffuser composition of the present invention is very useful for imparting light diffusing properties to a thermoplastic polymer .

Accordingly, another aspect of the present invention is a polymer composition containing a thermoplastic polymer and
a) from 0.001 to 0.3%, preferably from 0.01 to 0.25%, most preferably from 0.02 to 0.2% of the above-mentioned inorganic particles a) and
b) from 0.01 to 1.5%, preferably from 0.1 to 1.2%, most preferably from 0.2 to 1.0% of the above-mentioned polymeric particles b),
by the weight of the thermoplastic polymer.

The thermoplastic polymer generally is transparent. It may be clear or colored. Preferably, it is a polyacrylate, a transparent styrene/acrylonitrile copolymer, a polycarbonate or a blend of such a polymers. The light diffuser composition of the present invention is particularly useful for polycarbonates.

In the following paragraphs mainly polymer compositions are described which contain a polycarbonate as a thermoplastic polymer, although the present invention is not limited thereto.

Suitable polycarbonates are described in U.S. patent 4,722,955, column 2, lines 6-42 and the references cited therein. A polycarbonate generally is a polycondensate which is obtainable by reacting a diphenol, such as Bisphenol A and/or bishydroxyphenylfluorene, with phosgene or a diester of a carbonic acid, a dihydroxydiarylalkane, the aryl radicals of which carry one or more methyl groups or halogen atoms in the o- and/or m-position relative to the hydroxyl groups also being suitable, in addition to a unsubstituted dihydroxydiarylalkane. Examples of suitable diphenols which are useful as starting materials for a polycarbonate are listed in U.S. patent No. 4,627,949, column 2, line 68 - column 3, lines 1-22. Most preferably, the polycarbonate is prepared from Bisphenol A and phosgene.

Polycarbonates and methods of producing them are well known in the art. For example the polycarbonate can be prepared by a known interfacial two phase process, a homogeneous organic solution process and/or a melt process. U.S. patent No. 4,092,288 discloses aromatic polycarbonates and methods of preparing them in column 4, lines 4-68 and in Example 1. Alternatively, polycarbonates can be prepared from diphenylcarbonate or dimethyl carbonate by transesterification.

Branched polycarbonates are also suitable. If the polycarbonate is branched, it preferably contains from 0.01 to 3 mole %, more preferably from 0.05 to 2 mole % of a branching agent, by the weight of the polycarbonate. Branched polycarbonates, methods of preparing them and suitable branching agents are for example described in U.S. patent No. 3,544,514, the published European patent application EP-A-0,411,433 and in the references cited in EP-A-0,411,433. A preferred branching agent is 1,1,1-tris(4-hydroxyphenyl)ethane.

The polycarbonates preferably have a number average molecular weight of from 10,000 to 200,000, more preferably from 15,000 to 100,000 and most preferably from 17,000 to 45,000.

The end groups of the polycarbonate may be the same or different. The most preferred end groups are p-tert-butyl phenyl, p-octyl phenyl, or phenyl. End groups which can lead to a crosslinking of polycarbonate such as arylcyclobutene terminated carbonate polymers are particularly useful. The invention is not restricted to these examples.

The polymer composition of the present invention optionally contains an organic light diffuser in addition to the light-scattering polymeric particles b). If present, the amount of an additional organic light diffuser preferably is from 0.01 to 10%, more preferably from 0.02 to 5%, most preferably from 0.5 to 3%, by the weight of the thermoplastic polymer. Exemplary of useful known light diffusers are spherical cross-linked copolymers of 1-90 wt.-% of cyclohexylmaleimide and 99-10 wt.-% of styrene having an average diameter of 4-100 micrometer. Another useful known light diffuser is a poly(methyl methacrylate) resin having an average diameter of 0.5-100 micrometer, preferably 1-20 micrometer. The most preferred additional light diffusers are cross-linked homo- or copolymers which contain at least 15 wt.-%, preferably from 20 to 80 wt.-%, more preferably from 25 to 60 wt.-% of a polymerized, optionally alkylated acrylate. If the optionally alkylated acrylate is copolymerized, one or more of the following monomers are preferred for copolymerization: vinyl arenes, such as styrene or an alkyl styrene like methylstyrene or ethyl styrene; olefins, such as butadiene; acrylonitrile or maleimide. Two or more optionally alkylated acrylates can be copolymerized. If alkylated, the acrylate preferably contains a C₁₋₈ alkyl group, more preferably a C₂₋₈-alkyl group. The preferred alkyl acrylates are methyl acrylate, ethyl acrylate and butyl acrylate. These optional organic light diffusers do not have a core-shell morphology. Such organic light diffusers and methods of preparing them are generally known.

The polymer composition of the present invention may contain optional additives, such as an optical brightener or fluorescenting dyestuff, a pigment or colorant, tackifier, mold release agent, impact modifier, filler, etc., provided that these optional additives do not have a negative influence on the optical properties of the polymer composition. Such optional additives are generally known in the art. If present, the polymer composition contains an optical brightener, a fluorescenting dye and/or an impact modifier preferably in an amount of from 0.01 to 3 wt.-%. The amount of a pigment or colorant preferably is from 0.0001 to 5 wt.-%, if present at all. Preferred mold release agents are known esters of long fatty acids; their preferred amount is from 0.01 to 2 wt.-%. A preferred filler are glass fibers, their preferred amount is from 1 to 20 wt.-%. All percentages are based on the weight of the thermoplastic polymer.

The polymer composition of the present invention may also contain a stabilizer, such as an anti-oxidant and/or a UV stabilizer, such as a sulfur containing molecule, a phosphite, hindered phenol, hypophosphite, phosphonite and/or diphosphonite, such as tetrakis-(2,4-di-tert butylphenyl) biphenylene diphosphonite, etc., which may have been added during the production of the polycarbonate and/or during the production of the polymeric particles b). One or more stabilizers are preferably comprised in the polycarbonate composition in an amount of from 0.01 to 5%, preferably from 0.05 to 2%, by the weight of the polycarbonate.

A preferred stabilizer is for example an organo-phosphite, preferably a phosphite of formula (II) 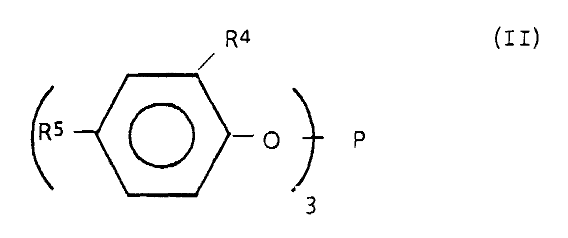 wherein R⁴ and R⁵ each independently are a C₁₋₆-alkyl group, a C₁₋₃-hydroxyalkyl group or a C₁₋₃-alkoxy group such as methyl, ethyl, n-propyl, i-propyl, n-butyl, i-butyl, tert-butyl, a pentyl or a hexyl group, a hydroxymethyl, hydroxyethyl or hydroxypropyl group or a methoxy, ethoxy or propoxyl group. Preferred thereof is tri(2,4-di-tert-butylphenyl)phosphite (IRGAPHOS 168, trademark).

Another preferred stabilizer is a hindered phenol. Hindered phenols and their use as antioxidants are described in Ullmann's Encyclopedia of Industrial Chemistry, Volume 3, "Antioxidants", pages 95-98, 5th ed., 1985, VCH Verlagsgesellschaft mbH and in Encyclopedia of Polymer Science and Engineering, Volume 2, "Antioxidants", pages 75-91, 1985 by John Wiley & Sons, Inc. Methods of preparing the hindered phenols are also well known in the art.

Preferred hindered phenols are those of formula III 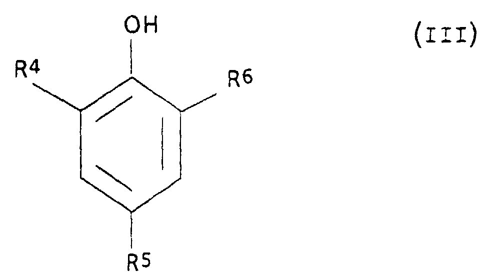 wherein R⁴, R⁵ and R⁶ each independently are a C₁₋₆-alkyl group, a C₁₋₃-hydroxyalkyl group, or a C₁₋₃-alkoxy group such as methyl, ethyl, n-propyl, i-propyl, n-butyl, i-butyl, tert-butyl, a pentyl or a hexyl group, a hydroxymethyl, hydroxyethyl or hydroxypropyl group or a methoxy, ethoxy or propoxyl group.

Generally at least one, preferably at least two groups should provide steric hindrance to the molecule of formula III. Preferably at least one, more preferably at least two of the groups R⁴, R⁵ and R⁶ are i-butyl or tert-butyl. Preferred examples of hindered phenols of formula III are 2,6-di-tert-butyl-4-methylphenol, 2,6-di-tert-butyl-4-sec-butylphenol, 4-(hydroxymethyl)-2,6-di-tert-butylphenol or 2,6-di-tert-butyl-4-methoxy-phenol.

Other preferred hindered phenols are those of formula IV 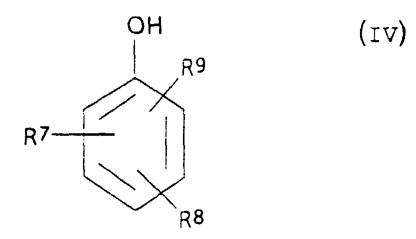 wherein R⁷, R⁸ and R⁹ are arranged in the ortho and para positions to the hydroxyl group, R⁷ is a C₁₋₆-alkyl group, R⁸ is a C₁₋₆-alkyl group or a group containing one or more ester, ether, amide, amine, phosphonite, phosphonate, thioester and/or thioether functionalities and containing up to 24, preferably up to 12 carbon atoms, such as the -CH₂-CH₂-C(O)-O-C₁₈H₃₇ group or the -CH₂-S-C₈H₁₇ group and R⁹ is a group containing one or more ester, ether, amide, amine, phosphonite, phosphonate, thioester and/or thioether functionalities and containing up to 24, preferably up to 12 carbon atoms, such as the -CH₂-CH₂-C(O)-O-C₁₈H₃₇ group or the -CH₂-S-C₈H₁₇ group. When R⁷ or R⁸ or both are a C₁₋₆-alkyl group, they preferably are methyl, ethyl, n-propyl, i-propyl, n-butyl, i-butyl, tert-butyl, a pentyl or a hexyl group.

Preferred examples of hindered phenols of formula IV are octadecyl 3,5-di-tert-butyl-4-hydroxyhydrocinnamate, commercially available as IRGANOX 1076 (trademark), 2-methyl-4,6-bis((octylthio)-methyl)-phenol, commercially available as IRGANOX 1520 (trademark), 2,6-di-tert-butyl-4-(dimethylaminomethyl)phenol or 3,5-di-tert-butyl-4-hydroxybenzyl di-O-ethyl phosphonate, commercially available as IRGANOX 1222.

Other preferred hindered phenols contain 2 phenolic groups, for example N,N'-1,6- hexamethylene-bis-3-(3,5-di-tert-butyl-4- hydroxyphenyl)propionamide, commercially available as IRGANOX 1098 (trademark), 1,6-hexamethylene bis(3,5-di-tert-butyl-4-hydroxyhydrocinnamate, commercially available as IRGANOX 259 (trademark), triethylene glycol bis[3-(3-tert-butyl-4-hydroxy-5-methylphenyl)] propionate, commercially available as IRGANOX 245 (trademark), N,N'-bis(3,5-di-tert-butyl-4-hydroxyhydrocinnamoyl)hydrazine, commercially available as IRGANOX MD 1024 and nickel or calcium bis[O-ethyl(3,5-di-tert-butyl-4-hydroxybenzyl)]phosphonate, the latter being commercially available as IRGANOX 1425.

The most preferred hindered phenols are tetrakis[methylene(3,5-di-tert-butyl-4-hydroxyhydrocinnamate)] methane, commercially available as IRGANOX 1010, 3,5-di-tert-butyl-4-hydroxyhydrocinnamate, commercially available as IRGANOX 1076 (trademark) or a 1:1 blend of IRGANOX 1010 and tri(2,4-di-tert-butyl-phenyl)phosphite (IRGAPHOS 168, trademark), which blend is commercially available as IRGANOX B 225.

The hindered phenol is advantageously utilized in combination with a phosphine of the general formula PR¹R²R³ (I), wherein R¹, R² and R³ independently from each other represent an alkyl, cycloalkyl, aryl or aryl-alkyl group or an aryl group which is substituted at the aromatic ring with one or more halogens and/or one or more alkyl, hydroxy or alkoxy groups.

The radicals R¹, R² and R³ can be identical or different. Of the alkyl groups those are preferred that have 1 to 18, preferably 1 to 12 carbon atoms, such as methyl, ethyl, n-propyl, i-propyl, n-butyl, sec. butyl or tert. butyl or the pentyl, hexyl, octyl, nonyl, decyl or octadecyl groups. The alkyl groups can be straight- chain or branched. Of the cycloalkyl groups those having 5 or 6 carbon atoms, such as cyclopentyl or cyclohexyl are preferred. Of the aryl groups those having from 6 to 14 carbon atoms, such as phenyl or naphthyl, are preferred. The aryl groups may be substituted with one or more of the above-mentioned alkyl groups and/or with one or more halogens, such as fluoride, chloride or bromide, and/or one or more hydroxy groups and/or one or more alkoxy groups. Alkoxy groups, if present, preferably contain 1 to 6 carbon atoms, such as the methoxy, ethoxy, n-propoxyl, i-propoxyl, n-butoxyl, sec. butoxyl or tert. butoxyl groups. If substituted, the aryl groups preferably are substituted with 1, 2 or 3 substituent groups. In the aryl-alkyl groups the above-mentioned alkyl groups are preferred and the aryl group preferably is phenyl. Preferred aryl-alkyl groups are benzyl, butyl phenyl or tolyl. Triphenyl phosphine is the most preferred compound of formula (I).

For preparing the polymer composition of the present invention 0.001 to 0.3 wt.-% of the above-described inorganic particles a), 0.01 to 1.5 wt.-% of the above-described pciymeric particles b) and, if desired, one or more of the above-mentioned optional additives are mixed with the thermoplastic polymer. These compounds may be premixed before blending the mixture with the thermoplastic polymer. Alternatively, these compounds may be mixed separately with the thermoplastic polymer. The inorganic particles a), the polymeric particles b) and the optional additives may be added simultaneously or in sequence to the thermoplastic polymer. The sequence of addition and the temperature during the addition are not critical. The compounds may be mixed in their undiluted form or one or more of the compounds may be diluted with an aqueous or organic diluent. instead of preparing a polymer composition containing the above-mentioned concentration of the particles a) and b), master batches can be prepared containing higher concentrations of the inorganic particles a) and polymeric particles b). The master-batches can be blended later with a thermoplastic polymer to prepare polymer compositions containing the claimed concentration of the particles a) and b). It is advisable to mix the inorganic particles a), the polymeric particles b) and the optional additives with the thermoplastic polymer, which may contain optional additives, before the thermoplastic polymer is compounded to granules or pellets. The manner of dispersing or mixing the inorganic particles a), the polymeric particles b) and any optional additives with the thermoplastic polymer(s) is not critical. However, the process chosen should be one which results in a great degree of dispersion of all the additives throughout the thermoplastic polymer. Preferred mixing equipment are mixing rolls, ribbon blenders, dough mixers, Banbury mixers, etc.

The polymer composition can be compounded to granules or pellets by known extrusion techniques. If the polymer composition contains polycarbonate, the extrusion is preferably conducted at a temperature of from 200 to 390°C, more preferably from 250 to 390°C, most preferably from 260 to 380°C. The mixture may be fed into an extruder and extruded to strands which is then comminuted into pellets or granules. Useful extruders are generally known in the art. The extruders generally have a single screw or a double screw. When using a double screw, the screw speed preferably is from 50 to 100 rpm, more preferably from 100 to 350 rpm. When using a single screw, one screw speed preferably is from from 5 to 250 rpm, more preferably from 10 to 150 rpm. A preferred compounding method is a devolatilizing extrusion process as generally described in U.S. patent No. 4,627,949 with or without applying a vacuum. The extrusion is generally conducted at a pressure of 0.1 to 100 bar, more preferably at 5 to 60 bar at the extrusion die.

The pellets or granules may be formed into molded articles in a generally known manner, for example by injection-molding, injection blow molding, roll mill processing, rotational molding etc. A preferred processing method is a devolatilizing injection-molding as generally described in U.S. patent No. 4,627,949. If the polymer composition contains polycarbonate, the molding is preferably conducted at a temperature of from 200 to 380°C, more preferably from 250 to 380°C, most preferably from 260 to 380°C.

Examples of molded articles are sheets, films, lamp covers, luminaires, lamps, etc. The molded articles have an excellent surface appearance. The surface is generally very smooth.

The invention is further illustrated by the following examples. Unless otherwise mentioned all parts and percentages are weight parts and weight percentages.

### Examples 1 to 9 and Comparative Examples A to K

The following components are used for producing the plaques of these examples:

Polycarbonate: In all examples and comparative examples polycarbonate pellets prepared by interfacial polycondensation of bisphenol A and phosgene are used. The polycarbonate has a melt flow rate of 3.3. The polycarbonate pellets are shaken with 1000 ppm of Cetiol 620 S (trademark of Henkel, Germany) as a tackifier and 1000 ppm of tetrakis-(2,4-di-tert-butylphenyl) biphenylene-diphosphonite, commercially available as Irgaphos-PEPQ (trademark) as an antioxidant. All amounts of the additives are based on the weight of the polycarbonate.

Light diffuser I: a polymer having a core of poly(butyl acrylate) and a shell of poly(methyl methacrylate). The polymer having core/shell morphology is commercially available from Rohm and Haas under the trademark Paraloid EXL 5137. The particle size of the powdered polymer is 2-15 micrometer, the average particle size is 8 micrometer.

Light diffuser II (comparison): a cross-linked copolymer of 58% methyl methacrylate, 39% styrene and 3% cross-linking agent. The polymer is commercially available from Sekisui Plastic under the trademark MSH-8. The polymer has an average particle size of 8 micrometer.

Light diffuser III (comparison): a non-cross-linked acrylate-styrene copolymer. The copolymer is generally used as a matting agent and is commercially available from Degussa under the trademark Degussa OP 278.

Titanium dioxide (TiO₂): having a number average particle size of 0.2 to 0.3 micrometer.

The polycarbonate (containing the above-indicated additives), the light diffuser and, in some examples, titanium dioxide are mixed and then extruded to strands using a Werner and Pfleiderer ZSK 25 mm co-rotating twin screw extruder. The extrusion is carried out under vented conditions at 300 rpm and 60-70 % torque. The amounts of the light diffuser and of titanium dioxide listed in Table 1 below are based on the weight of the polycarbonate. The extrusion temperature is listed in Table 1 below.

Strands are pelletized using a Scherr and Cie 50-E pelletizer. The pellets are injection molded at 300°C into plaques of 3.2 mm thickness. An Arburg Allrounder CMD 370 equipped with a non-vented injection barrel and 35 mm screw is utilized.

The total light transmittance and light diffusion of the plaques are measured according to ASTM D-1003. The test specimens are measured using a Hunterlab Colorquest in transmission mode, utilizing a light source C (daylight simulation), an observer angle of 2° and wave lengths of 400-700 nm.

The color of the produced plaques is measured according to a system defined by the Commission Internationale d'Eclairage (CIE-system) in reflectance (black) according to ASTM E 308. In this system the +L* -axis indicates the brightness, -L* the darkness of the color, +a* the red color component, -a* the green color component, +b* the yellow color component and -b* the blue color component. The components L*, a* and b* are measured prior to and after subjecting the plaques to oven aging at 140°C during 500 hours. The difference between the values b* after and prior to oven aging is calculated and listed in the Table below as delta b. The higher delta b is, the higher is the yellowness of the plaque due to oven aging and the lower is the thermal resistance of the plaque over an extended period of time.

**Table 1**

| (Comp.) Example | Light diffuser (type/%) | TiO₂ (%) | Total Light Transmittance (%) | Light diffusion | Delta b | Extrusion temp. (°C) |
|---|---|---|---|---|---|---|
| A | I / 0.5 | - | 69.6 | 58.1 | 2.2 | 315 |
| B | I / 1 | - | 62.3 | 52.2 | 5.3 | 315 |
| C | I / 2 | - | 57.5 | 48.1 | 5.4 | 315 |
| D | I / 3 | - | 55.5 | 46.3 | 5.7 | 315 |
| E | I / 5 | - | 50.0 | 41.6 | 5.7 | 315 |
| 1 | I / | 0.07 | 43.7 | 36.2 | 3.3 | 315 |
| 2 | I / 0.5 | 0.02 | 57.7 | 48.2 | 4.3 | 315 |
| 3 | I / 0.5 | 0.07 | 43.9 | 36.4 | 3.9 | 315 |
| 4 | I / 0.5 | 0.2 | 24.6 | 20.2 | 3.4 | 315 |
| 5 | I / 1 | 0.02 | 55.1 | 46.0 | 4.6 | 315 |
| 6 | I / 1 | 0.1 | 37.1 | 30.7 | 4.0 | 315 |
| 7 | I / 1 | 0.2 | 24.4 | 20.0 | 3.6 | 315 |
| F | I / 2 | - | 58.6 | 49.1 | 6.0 | 365 |
| G | I / 3 | - | 56.2 | 47.0 | 6.3 | 365 |
| 8 | I / 0.5 | 0.02 | 57.8 | 48.3 | 5.2 | 365 |
| 9 | I / 1 | 0.02 | 57.2 | 47.8 | 5.4 | 365 |
| H | II / 1.5 | - | 92 | 79 | 3.9 | 365 |
| I | II / 1 | 0.015 | 63 | 52 | 8.1 | 365 |
| J | III / 1.5 | - | 89 | 51 | 2.1 | 365 |
| K | III / 1 | 0.015 | 62 | 46 | 4.9 | 365 |

The comparison between Example 2 (0.5% light diffuser I and 0.02% titanium dioxide) and comparative Example C (2% light diffuser I) illustrates that the plaque of Example 2 has essentially the same total light transmittance and light diffusion as the plaque of comparative Example C but a better color stability (smaller delta b). The comparison between Example 5 (1% light diffuser I and 0.02% titanium dioxide) and comparative Example D (3% light diffuser I) illustrates that the plaque of Example 5 has essentially the same total light transmittance and light diffusion as the plaque of comparative Example D, but a better color stability. Visual inspection of the plaques after oven aging shows that the plaque of Example 2 is whiter than the plaque of comparative Example C and the plaque of Example 5 is whiter than the plaque of comparative Example D. Further, the light diffuser compositions of Examples 2 and 5 respectively are cheaper than the light diffuser in comparative Examples C and D respectively. The same results are achieved when one extrusion of the polymer compositions is conducted at 365°C instead of at 315°C (compare Example 8 with comparative Example F and Example 9 with comparative Example G).

The comparison between comparative Examples A-E illustrates that the color stability during oven aging decreases, i.e. delta b increases when the concentration of the light diffuser I in the plaque increases.

The comparison between Examples 2-4 and 5-7 illustrates that at a given concentration of light diffuser I (0.5 or 1%) the color stability of the plaques during oven aging increases with increasing concentrations of titanium dioxide. This finding is surprising and contrary to the results of comparative Examples H/I and J/K. Although the concentration of the light diffuser II in comparative Example I is smaller than in comparative Example H and although only a small amount of titanium dioxide is incorporated into the plaque of comparative Example I, delta b of comparative Example I is substantially higher than delta b of comparative Example H. The same results are observed for comparative Examples J and K.

### Examples 10 and 11 and Comparative Examples L to P

Polycarbonate pellets prepared by interfacial polycondensation of bisphenol A and phosgene and branched with 0.5% of 1,1,1-tris(4-hydroxyphenyl)ethane are used in these Examples and Comparative Examples. The polycarbonate has a melt flow rate of 3.0. The polycarbonate is heat-stabilized with 1000 ppm of tetrakis-(2,4-di-tert-butylphenyl) biphenylene-diphosphonite, commercially available as Irgaphos-PEPQ (trademark), based on the weight of the polycarbonate.

The same light diffusers I and III and titanium dioxide are used as described above referring to Examples 1-9. The amounts of the light diffuser and titanium dioxide are listed in Table 2 below.

The extrusion and injection molding are conducted in the same manner as described above for Examples 1-9 except that the extrusion temperature is 298°C. The total light transmittance, light diffusion and color stability of the produced plaques are measured in the same manner as described above referring to Examples 1-9.

**Table 2**

| (Comp.) Example | Light diffuser (type/%) | TiO₂ (%) | Total Light Transmittance (%) | Light diffusion | Delta b |
|---|---|---|---|---|---|
| L | I / 0.5 | - | 70.8 | 59.6 | 3.8 |
| M | I / 1 | - | 60.4 | 51.1 | 4.75 |
| N | I / 4.5 | - | 46.9 | 39.6 | 5.6 |
| 10 | I / 0.5 | 0.05 | 45.1 | 38.0 | 3.5 |
| 11 | I / 1 | 0.05 | 43.5 | 37.1 | 4.4 |
| O | III / 1 | - | 86.9 | 47.5 | 1.6 |
| P | III / 1 | 0.05 | 46.4 | 39.0 | 4.6 |

The comparison between Example 10 (0.5% light diffuser I and 0.05% titanium dioxide) and comparative Example N (4.5% light diffuser I) illustrate that the plaque of Example 10 has essentially the same total light transmittance and light diffusion as the plaque of comparative Example N but a substantially better color stability (smaller delta b).

The comparisons between Example 10 and Comparative Example L and between Example 11 and Comparative Example M illustrate that even if the concentration of the light diffuser I is kept constant, the addition of titanium dioxide generally decreases delta b, i.e., increases the color stability of the claimed polymer composition.

This finding is surprising and contrary to the results of comparative Examples O and P. Delta b of comparative Example P is substantially higher than delta b of comparative Example O. The plaque of comparative Example O has a good color stability, but a total light transmittance which is too high for many lighting applications.

## Claims

1. A light diffuser composition comprising
a) from 0.1 to 30 weight parts of inorganic particles having an average particle diameter of from 0.1 to 1 micrometer and a refractive index of from 1.9 to 3.2 and
b) from 1 to 150 weight parts of polymeric particles having a core/shell morphology with a core of a rubbery vinyl polymer and one or more shells, which particles contain at least 15% of a polymerized alkyl acrylate or alkyl methacrylate, based on the total weight of the polymeric particles.

2. The light diffuser composition of claim 1 wherein the rubbery vinyl polymer of the core of the polymeric particles b) contains at least 15% of a polymerized acrylate, methacrylate, monovinyl arene or optionally substituted butadiene and from 0 to 85% of one or more copolymerized vinyl monomers, based on the total weight of the rubbery vinyl polymer.

3. The light diffuser composition of claim 1 wherein the polymeric particles b) contain a core of a rubbery alkyl acrylate polymer, the alkyl group having from 2 to 8 carbon atoms, optionally copolymerized with from 0 to 5% cross-linker and from 0 to 5% graftlinker, based on the weight of the core, and one or more shells containing a polymer of a methacrylate, acrylate, vinyl arene, vinyl carboxylate, acrylic acid and/or methacrylic acid, the shells comprising from 5 to 40% of the weight of the particles.

4. The light diffuser composition of any one of claims 1 to 3 wherein the weight ratio of the polymeric particles b) to the inorganic particles a) is from 0.5 : 1 to 100 : 1.

5. The light diffuser composition of any one of claims 1 to 4 wherein the inorganic particles a) are titanium dioxide, silica gel, zinc sulfide, zinc oxide or MgTiO₃.

6. Use of the light diffuser composition of any one of claims 1 to 5 for imparting light diffusing properties to a thermoplastic polymer.

7. A polymer composition comprising a thermoplastic polymer and
a) from 0.001 to 0.3% of the inorganic particles a) as defined in claim 1 or claim 5 and
b) from 0.01 to 1.5% of the polymeric particles b) as defined in any one of claims 1 to 3, based on the weight of the thermoplastic polymer.

8. The polymer composition of claim 7 comprising
a) from 0.01 to 0.25% of the inorganic particles a) and
b) from 0.1 to 1.2% of the polymeric particles b), based on the weight of the thermoplastic polymer.

9. The polymer composition of claim 7 or claim 8 wherein the thermoplastic polymer is a polycarbonate.

10. The polymer composition of any one of claims 7 to 9 in the shape of granules, pellets or a molded article.

11. A process for producing the polymer composition of any one of claims 7 to 10 which comprises mixing with a thermoplastic polymer
a) from 0.001 to 0.3% of the inorganic particles a) as defined in claim 1 or claim 5 and
b) from 0.01 to 1.5% of the polymeric particles b) as defined in any one of claims 1 to 3, based on the weight of the thermoplastic polymer, optionally compounding the mixture to granules or pellets and optionally producing a molded article from the granules or pellets.

## Patentansprüche

1. Lichtstreuende Zusammensetzung, umfassend:
a) von 0,1 bis 30 Gew.-Teile von anorganischen Teilchen mit einem Durchschnittsteilchendurchmesser von 0,1 bis 1 Mikrometer und einem Brechungsindex von 1,9 bis 3,2, und
b) von 1 bis 150 Gew.-Teile von polymeren Teilchen, die eine Kern/Mantel-Morphologie mit einem Kern aus kautschukartigem Vinylpolymerem und einem oder mehreren Mänteln haben, wobei die Teilchen wenigstens 15 % eines polymerisierten Alkylacrylates oder Alkylmethacrylates, bezogen auf das Gesamtgewicht der polymeren Teilchen, enthalten.

2. Lichtstreuende Zusammensetzung nach Anspruch 1, in welcher das kautschukartige Vinylpolymere des Kerns der polymeren Teilchen b) wenigstens 15 % eines polymerisierten Acrylates, Methacrylates, Monovinylarens oder wahlweise substituierten Butadiens und von 0 bis 85 % von einem oder mehreren copolymerisierten Vinylmonomeren, bezogen auf das Gesamtgewicht des kautschukartigen Vinylpolymeren, enthält.

3. Lichtstreuende Zusammensetzung nach Anspruch 1, in welcher die polymeren Teilchen b) enthalten: einen Kern aus einem kautschukartigen Alkylacrylatpolymeren, wobei die Alkylgruppe 2 bis 8 Kohlenstoffatome hat, wahlweise copolymerisiert mit von 0 bis 5 % Vernetzer und von 0 bis 5 % Pfropfvernetzer, bezogen auf das Gewicht des Kerns, und einen oder mehrere Mäntel, die ein Polymeres eines Methacrylates, Acrylates, Vinylarens, Vinylcarboxylates, Acrylsäure und/oder Methacrylsäure enthalten, wobei die Mäntel von 5 bis 40 % des Gewichtes der Teilchen ausmachen.

4. Lichtstreuende Zusammensetzung nach einem der Ansprüche 1 bis 3, in welcher das Gewichtsverhältnis der polymeren Teilchen b) zu den anorganischen Teilchen a) von 0,5 : 1 bis 100 : 1 beträgt.

5. Lichtstreuende Zusammensetzung nach einem der Ansprüche 1 bis 4, in welcher die anorganischen Teilchen a) Titandioxid, Kieselgel, Zinksulfid, Zinkoxid oder MgTiO₃ sind.

6. Verwendung der lichtstreuenden Zusammensetzung nach einem der Ansprüche 1 bis 5 zum Erteilen lichtstreuender Eigenschaften an ein thermoplastisches Polymeres.

7. Polymerzusammensetzung, umfassend ein thermoplastisches Polymeres und
a) von 0,001 bis 0,3 % der anorganischen Teilchen a), wie in Anspruch 1 oder Anspruch 5 definiert, und
b) von 0,01 bis 1,5 % der polymeren Teilchen b), wie in einem der Ansprüche 1 bis 3 definiert,
bezogen auf das Gewicht des thermoplastischen Polymeren.

8. Polymerzusammensetzung nach Anspruch 7, umfassend
a) von 0,01 bis 0,25 % der anorganischen Teilchen a), und
b) von 0,1 bis 1,2 % der polymeren Teilchen b),
bezogen auf das Gewicht des thermoplastischen Polymeren.

9. Polymerzusammensetzung nach Anspruch 7 oder Anspruch 8, in welcher das thermoplastische Polymere ein Polycarbonat ist.

10. Polymerzusammensetzung nach einem der Ansprüche 7 bis 9 in Form von Granulen, Pellets oder einem Formgegenstand.

11. Verfahren zur Herstellung der Polymerzusammensetzung nach einem der Ansprüche 7 bis 10, welches das Mischen mit einem thermoplastischen Polymeren umfaßt von:
a) von 0,001 bis 0,3 % der anorganischen Teilchen a), wie in Anspruch 1 oder Anspruch 5 definiert, und
b) von 0,01 bis 1,5 % der polymeren Teilchen b), wie in einem der Ansprüche 1 bis 3 definiert,
bezogen auf das Gewicht des thermoplastischen Polymeren, wahlweise Kompoundieren der Mischung zu Granulen oder Pellets und wahlweise Herstellen eines Formgegenstandes aus den Granulen oder Pellets.

## Revendications

1. Composition diffusant la lumière comprenant :
a) de 0,1 à 30 parties en poids de particules minérales qui présentent un diamètre moyen de particules allant de 0,1 à 1 µm et un indice de réfraction allant de 1,9 à 3,2, et
b) de 1 à 150 parties en poids de particules polymériques présentant une structure de type coeur/enveloppe présentant un coeur constitué d'un polymère vinylique caoutchouteux et une ou plusieurs enveloppes, lesquelles particules contiennent au moins 15 % d'acrylate d'alkyle polymérisé ou de méthacrylate d'alkyle polymérisé, par rapport au poids total de particules polymériques.

2. Composition diffusant la lumière selon la revendication 1, dans laquelle le polymère vinylique caoutchouteux du coeur des particules polymériques b) contient au moins 15 % d'un acrylate, d'un méthacrylate, d'un monovinylarène ou d'un butadiène éventuellement substitué, polymérisés et de 0 à 85 % d'un ou de plusieurs monomères vinyliques copolymérisés, par rapport au poids total du polymère vinylique caoutchouteux.

3. Composition diffusant la lumière selon la revendication 1, dans laquelle les particules polymériques b) contiennent un coeur constitué d'un polymère caoutchouteux d'acrylate d'alkyle, le groupe alkyle comportant de 2 à 8 atomes de carbone, éventuellement copolymérisé avec 0 à 5 % d'un agent de réticulation et 0 à 5 % d'un raccord à greffon, par rapport au poids du coeur, et une ou plusieurs enveloppes contenant un polymère de méthacrylate, d'acrylate, de vinylarène, de carboxylate de vinyle, d'acide acrylique et/ou d'acide méthacrylique, les enveloppes constituant de 5 à 40 % du poids des particules.

4. Composition diffusant la lumière selon l'une quelconque des revendications 1 à 3, dans laquelle le rapport pondéral des particules polymériques b) aux particules minérales a) vaut de 0,5:1 à 100:1.

5. Composition diffusant la lumière selon l'une quelconque des revendications 1 à 4, dans laquelle les particules minérales a) sont formées de dioxyde de titane, d'un gel de silice, de sulfure de zinc, d'oxyde de zinc ou de MgTiO₃.

6. Utilisation de la composition diffusant la lumière selon l'une quelconque des revendications 1 à 5, pour conférer des propriétés de diffusion de la lumière à un polymère thermoplastique.

7. Composition de polymère comprenant un polymère thermoplastique et
a) de 0,001 à 0,3 % de particules minérales a) telles que définies dans la revendication 1 ou 5, et
b) de 0,01 à 1,5 % de particules polymériques b) telles que définies dans l'une quelconque des revendications 1 à 3, par rapport au poids du polymère thermoplastique.

8. Composition de polymère selon la revendication 7, comprenant :
a) de 0,01 à 0,25 % de particules minérales a) et
b) de 0,1 à 1,2 % de particules polymériques b),
par rapport au poids du polymère thermoplastique.

9. Composition de polymère selon la revendication 7 ou 8, dans laquelle le polymère thermoplastique est un polycarbonate.

10. Composition de polymère selon l'une quelconque des revendications 7 à 9, se trouvant sous la forme de granulés, de pastilles ou d'un article moulé.

11. Procédé pour produire la composition de polymère selon l'une quelconque des revendications 7 à 10, qui comprend le mélangeage avec un polymère thermoplastique,
a) de 0,001 à 0,3 % de particules minérales a) telles que définies dans la revendication 1 ou 5, et
b) de 0,01 à 1,5 % de particules polymériques b) telles que définies dans l'une quelconque des revendications 1 à 3, par rapport au poids du polymère thermoplastique,
éventuellement le compoundage du mélange en granulés ou en pastilles, et éventuellement la production d'un article moulé à partir des granulés ou des pastilles.
